# EUROPEAN PATENT APPLICATION

(11) **EP 3 156 224 A1**
(43) Date of publication of application: **19.04.2017**
(21) Application number: 15189389.8
(22) Date of filing: 12.10.2015
(51) Int. Cl.: B32B 15/20

(54) **A MULTILAYER MEMBRANE AND METHOD OF PRODUCTION OF THE SAME**

(71) Applicant: Ferrari S.r.l., 25020 Bassano Bresciano (Brescia) (IT)
(72) Inventor: CABA, Valentina, 25020 Bassano Bresciano (Brescia) (IT)
(74) Representative: Lunati & Mazzoni S.r.L.

(57) **Abstract**

A multilayer membrane (1) is provided for, comprising an aluminium metal sheet (2) and a polyurethane layer (3) consisting of polyurethane resin coating.

## Description

The present invention relates to a multilayer membrane and method of production of the same of the type as recited in the preamble of the independent claims.

In particular, the invention relates to a membrane suitable to be used, for example, as a coating for bottle caps, flame-protective clothing, the use of coloured sheets for wrapping or packaging (both of various items and food), for the veneering of furnishing surfaces such as, for example, those of pieces of furniture or as a protective coating of machinery or the like.

Currently, the production method of a membrane provides for depositing a veneering and/or functional coating on a sheet of aluminium or other metal, using a process depending on the material deposited and on the required characteristics of the membrane.

In the case of membranes for aesthetic use the process provides for painting the sheets with acrylic paints or alternatively by means of an anodic coating which is fixed to the surface of the sheet duly pre-treated using acids or similar. Conversely, in the case of membranes requiring specific technical and mechanical characteristics, the production method provides for adopting specific treatments with acids, suitably supplemented paints or the use of films glued to the sheet. Alternatively, some production methods require that the sheet is subjected to zinc plating, nickel plating or galvanic treatment.

The prior art mentioned above has several significant drawbacks.

A first drawback, specific especially to membranes obtained by painting is the fact that the paint is subject to probable detachment and, therefore, does not guarantee optimal, long-lasting protection.

Another drawback, related to galvanic treatments, is the high environmental pollution caused by the acids used, which release toxic fumes into the environment.

A further drawback is the inability to obtain three-dimensional tactile effects or other finishes of high aesthetic value.

In this situation the technical purpose of the present invention is to devise a multilayer membrane and method of production of the same able to substantially overcome the drawbacks mentioned.

Within the sphere of said technical purpose one important purpose of the invention is to have a membrane offering optimal and long-lasting protection and, in particular, particularly resistant to external agents.

Another important purpose of the invention is a production method and thus a membrane of reduced cost.

A further purpose of the invention is a production method characterised by reduced environmental impact not requiring laborious and time-consuming unloading and disposal of the waste.

A further purpose of no less importance is to have a multilayer membrane with tactile 3D or other finishes of high aesthetic value.

The technical purpose and specified aims are achieved by a multilayer membrane and method of production of the same thereof according to the appended independent claims.

Preferred embodiments are evident from the dependent claims.

The characteristics and advantages of the invention are clearly evident from the following detailed description of a preferred embodiment thereof, with reference to the accompanying drawings, in which:

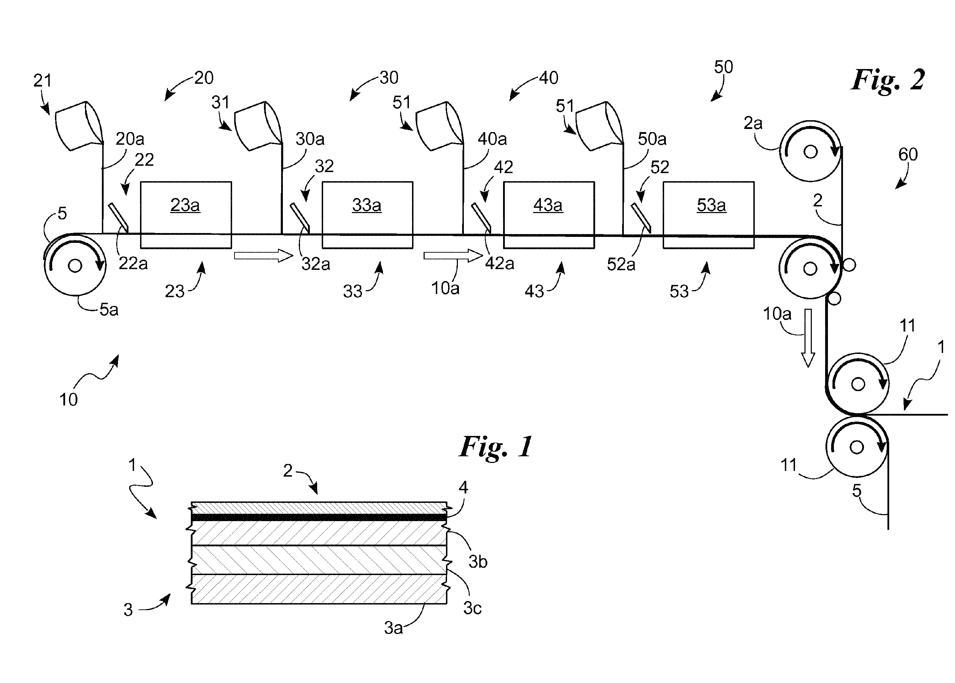

**Fig. 1** shows a multilayer membrane according to the invention; and
**Fig. 2** shows the production method of a multilayer membrane according to the invention in schematic form.

With reference to said drawings, reference numeral **1** globally denotes the multilayer membrane.

It is suitable for use as a coating membrane for bottle caps, such as bottles of sparkling wine or champagne; to be used as fabric or a fabric insert for fire-protective clothing, or clothing protecting from high temperatures or other similar agents; to be joined to furnishing items, such as doors and door panels and other furniture parts, constituting the covering; or as a cover and/or coating of machinery or equipment which, working in harsh environments require coverings with specific physical-mechanical characteristics.

Multilayer membrane 1 comprising a metal sheet **2** identifying the inner layer of the membrane 1, i.e. the layer suitable to come into contact with the object to be coated; at least one polyurethane layer **3** identifying the outer surface of the multilayer membrane 1; and an adhesive layer **4** interposed between the polyurethane layer 3 and the metal sheet 2 and suitable to firmly join the polyurethane layer 3 and the metal sheet 2 to each other.

The metal sheet 2 is preferably made of aluminium and, in particular, has a thickness substantially between 10 and 300 µm. It should be noted, however, that the metal sheet 2 may, alternatively, have a thickness greater than a millimetre.

The polyurethane layer 3, is preferably hot-coated and mainly composed of one or more polyurethane resin coatings and has a total thickness, preferably between 10 µm and 300 µm and a density of between 10 g/m² and 300 g/m² and more preferably between 50 g/m² and 150 g/m².

It is also preferably mono-component thermosetting. Mono-component since the polyols and isocyanates that compose it, when used have already reacted prior to their use and to the coating.

The layer 3 comprises one or more substrates, appropriately three, each of which made of a polyurethane resin coating. In detail, it has an outer substrate **3a**; an inner substrate **3b** placed between the outer substrate 3a and the metal sheet 2 and firmly joined to the sheet 2; and, preferably, an intermediate substrate 3c placed between the substrates 3a and 3b.

The outer substrate 3a comprises a mixture of polyurethane resins with features suitable to withstand external agents and to provide tactile features (embossed effects).

The inner substrate 3b and the intermediate substrate 3c comprise a mixture of polyurethane resins reinforcing the first with additives to give technical properties and possibly pigmentation for chromatic effects.

Placed between the metal sheet 2 and the polyurethane layer 3, in particular between the metal sheet 2 and the inner substrate 3b, the multilayer membrane 1 has an adhesive layer 4 firmly joining the sheet 2 and the substrate 3b.

The adhesive layer 4 is made of appropriately cross-linked polyurethane.

The multilayer membrane 1 is innovatively made by means of a new production method **10**.

The production method 10 of the membrane 1 comprises a transfer process and, in brief, provides for a coating in which the layer 3 is made by coating transfer paper **5** with at least one polyurethane solution; joining said polyurethane layer 3 to a metal sheet 2 to make the multilayer membrane 1; and detaching the transfer paper 5 from the multilayer membrane 1, i.e. from the metal sheet 2 and polyurethane layer 3 assembly.

The transfer paper 5 is wound onto a roll **5a** and moved by one or more traction rollers **11** arranged at the end of the line, along a processing line **10a** preferably arranged along a horizontal plane, i.e. parallel to the gravitational gradient. The coating comprises at least one coating step of a polyurethane resin mixture, i.e. a mixture consisting of one or more polyurethane resins diluted with a solvent such as DMF (dimethylformamide) or water.

The coating step provides, in succession, for a step of depositing the polyurethane mixture; a distribution step in which an adjustment blade distributes the mixture which thus acquires a nearly uniform thickness; and a drying step of the polyurethane mixture suitable to evaporate the solvent.

In particular, the production method 10 provides for three consecutive coating steps, i.e. a first coating step **20** suitable to make the outer substrate 3a by coating the transfer paper 5 with a first polyurethane mixture 20a; a second coating step **30** suitable to make the intermediate substrate 3c by coating the outer substrate 3a with a second polyurethane mixture **30a;** a third coating step **40** suitable to make the inner substrate 3b by coating the intermediate substrate 3c with a third polyurethane mixture **40a**.

The first polyurethane mixture 20a, the second polyurethane mixture 30a and the third polyurethane mixture 40a are in polyurethane appropriately supplemented with additives and, possibly, pigments.

The first coating step 20 comprises a first depositing sub-step **21**; a first distribution sub-step **22**; and a first drying sub-step **23**.

In the first sub-step 21, the first mixture 20a is deposited, by gravity, on the transfer paper 5 which continuing to advance in the processing direction 10a, comes close to a first adjustment blade **22a** almost parallel to the transfer paper 5.

At this point the distribution sub-step 22 begins in which the first blade 22a spreads on the transfer paper 5, the first mixture 20a which thus acquires a uniform thickness. Preferably, the distance between the first adjustment blade 22a and transfer paper 5 and thus the thickness of the first polyurethane mixture 20a are substantially between 5 µm to 1000 µm.

After the transit of the first adjustment blade 22a, the paper 5 and the first mixture 20a pass through a first drying kiln **23a** for a period of time substantially between 30s e 60s, where they are subjected to the first drying sub-step 23.

The first oven 23a has a temperature practically comprised between 50°C and 200°C so that the solvent of the first mixture 20a evaporates completely leaving, joined to the paper 5, the polyurethane resin of the first mixture 20a constituting the outer substrate 3a.

Once the transfer paper 5 and the outer substrate 3a assembly has come out of the drying oven 23a, it is subjected to the second coating step 30 which, similarly to the first step 20, provides for a second depositing sub-step **31**; a second distribution sub-step **32**; and a second drying sub-step **33**.

During the second depositing sub-step 31 the second mixture 30a is deposited by gravity on the outer substrate 3a, in the second distribution sub-step 32 a second adjustment blade **32a** spreads the second mixture 30a on the outer substrate 3a.

In particular, the second adjustment blade 32a, being almost parallel to the transfer paper 5 and being a distance from the sheet substantially between 5 µm and 1000 µm, defines for the second mixture 30a a uniform thickness of appropriate value.

Subsequently, the transfer paper 5, the outer substrate 3a and the second mixture pass through a second drying kiln **33a** for a period of time substantially between 30s and 60s, which having a temperature practically comprised between 50°C and 200°C, permits the complete evaporation of the solvent leaving fixed on the outer substrate 3a the resin of the second mixture 30a and thus the intermediate substrate 3c.

Once the second coating sub-step 30 is completed, the third coating step 40 begins, also comprising a third depositing sub-step **41** in which the third mixture 40a is deposited by gravity on the intermediate substrate 3c; a third distribution sub-step **42** in which the third adjustment blade **42a**, being almost parallel to the transfer paper 5 and being a distance from the paper 5 substantially between 5 µm and 1000 µm, distributes on the intermediate layer 3c the third mixture 40a which acquires a uniform thickness; and a third drying sub-step **43** in which the transfer paper 5, the substrates 3a and 3c and the third mixture pass through a third drying kiln **43a** for a period of time substantially between 30s and 60s, which having a temperature comprised between 50°C and 200°C, evaporates the solvent of the third mixture 40a, leaving fixed on the intermediate substrate 3a the resin of the second mixture 40a and thus the inner substrate 3b.

At this point the polyurethane layer 3 is fully formed and the gluing step begins in which the membrane 1 is obtained by gluing a metal sheet 2 to the layer 3. Preferably, the gluing step comprises an additional coating step **50** in which the adhesive layer 4 is made on the polyurethane layer 3 and, in particular, on the inner substrate 3b; and a bonding step **60** in which the multilayer membrane is made by gluing the metal sheet 2 to the polyurethane layer 3. The bonding step 60 takes place immediately prior to the additional coating step 50, so that the adhesive layer 4.

The additional coating step 50 provides for an additional depositing sub-step **51**, preferably by gravity, of a gluing mixture **50a** on the polyurethane layer 3 and, specifically, on the inner substrate 3b.

The gluing mixture 50a comprises polyurethane adhesive and a solvent, appropriately DMF or water.

Subsequently, the additional coating step 50 comprises a distribution sub-step **52** in which an adjustment blade **52a**, parallel and spaced from the paper 5, distributes the gluing mixture 50a, defining a uniform thickness thereof; and, lastly, a drying sub-step **53** in which the transfer paper 5, the polyurethane layer 3, and the gluing mixture 50a pass through a drying kiln **53a** for a period of time substantially between 30s and 60s, which having a temperature comprised between 50°C and 200°C, evaporates the solvent of the gluing mixture 50a leaving an adhesive layer 4 attached to the inner substrate 3b.

After completing the additional coating step 50, the method provides for the bonding step 60.

The metal sheet 2 is wound on an additional roll **2a** suitable to be brought into contact and laid on the adhesive layer 4 which thus binds it by gluing to the polyurethane layer 3 making the multilayer membrane 1.

The production method 10 of a multilayer membrane 1 may lastly provide for an adjustment step in which the distance of the transfer paper 5 from one or more of the blades 22a, 32a, 42a and 52a is varied so as to change the thickness of at least one of the substrates 3a, 3b and 3c or of the adhesive layer 4.

The invention achieves important advantages.

A first advantage is the long-term stability of the technical and aesthetic characteristics of the multilayer membrane 1 which thus ensures optimal and long-lasting protection.

Such aspect has been achieved thanks to both the special production method 10 which, forming the substrates 3a, 3b and 3c by coating ensures the firm anchorage thereof to the metal sheet 2 and to the adhesive layer 4 which firmly binds the polyurethane layer 3 to the metal sheet 2.

In particular, the applicant has shown that the membrane 1 is highly resistant to atmospheric agents and to any type of processing, such as for example die-casting and riveting.

Another advantage is the reduction of production waste and scrap which would require complex and costly disposal operations and, therefore, the reduced environmental impact of the production method.

An important advantage is the fact that the method 10 makes it possible to produce a membrane 1 with high resistance and durable embossing.

Another advantage is the fact that the method permits the use both on sheets of a few microns and on plates of several millimetres (therefore rigid, non-coiling) and of different metals.

In fact, using a paper sheet 5 having engravings it is possible to obtain a polyurethane layer 3 and, in particular, an outer layer 3a which, being obtained by coating, copies and thus reproduces such engravings.

The invention is susceptible to variations within the inventive concept. All the elements as described and claimed herein may be replaced with equivalent elements and the scope of the invention includes all other details, materials, shapes and dimensions.

## Claims

1. Multilayer membrane (1) comprising a metal sheet (2) in aluminium; **characterised in that** it comprises a polyurethane layer (3) composed of a polyurethane resin coating.

2. Multilayer membrane (1) according to claim 1, in which said polyurethane layer (3) has a total thickness preferably comprised between 10 µm and 300 µm and a density comprised between 10 g/m2 and 300 g/m2.

3. Multilayer membrane (1) according to one or more of the previous claims, in which said layer (3) comprises an outer substrate (3a) and an inner substrate (3b) positioned between said outer substrate (3a) and said metal sheet (2); and in which said substrates (3a, 3b) consist of polyurethane resin coatings.

4. Multilayer membrane (1) according to the previous claim, in which said layer (3) comprises an intermediate substrate (3c) positioned between said substrates (3a, 3b) and consisting of polyurethane resin coating.

5. Multilayer membrane (1) according to one or more of the previous claims, comprising an adhesive layer (4) positioned between said polyurethane layer (3) and said metal sheet (2).

6. Method of production (10) a multilayer membrane (1), **characterised in that** it comprises a coating (20, 30, 40) on a transfer paper (5) of a polyurethane layer (3) in polyurethane resins, a connection (50, 60) of said polyurethane layer (3) with a metal sheet (2) for making said multilayer membrane (1) and a detachment of said membrane (1) from said transfer paper (5).

7. Production method (10) according to the preceding claim, in which said coating is divided into consecutive steps and comprises at least a first coating step (20), a second coating step (30) and a third coating step (40).

8. Production method (10) according to one or more of the claims 7-8, in which each of said coating steps (20, 30, 40) comprises a sub-step (21, 31, 41) of depositing a polyurethane mixture comprising said polyurethane resin and a solvent; and a drying sub-step (23, 33, 43) in which said solvent is evaporated.
